# EUROPÄISCHE PATENTSCHRIFT

(11) **EP 4 075 029 B1**
(45) Veröffentlichungstag und Bekanntmachung des Hinweises auf die Patenterteilung: **12.06.2024**
(21) Anmeldenummer: 21168871.8
(22) Anmeldetag: 16.04.2021
(51) Int. Cl.: F16J 9/00, F16J 15/44, F16J 15/26, F16J 15/40, F04C 27/00, F04C 18/12

(54) **DICHTUNGSANORDNUNG FÜR DREHKOLBENMASCHINEN**
SEALING ASSEMBLY FOR ROTARY PISTON MACHINES
AGENCEMENT D'ÉTANCHÉIFICATION POUR MACHINES À PISTON ROTATIF

(43) Veröffentlichungstag der Anmeldung: 19.10.2022
(73) Patentinhaber: Aerzener Maschinenfabrik GmbH, 31855 Aerzen (DE)
(72) Erfinder: Reicherdt, Ivan, 31855 Aerzen (DE); Dziadek, Philipp, 31855 Aerzen (DE)
(74) Vertreter: Hoffmann Eitle

(56) Entgegenhaltungen:
- EP-A1- 2 305 951
- DE-A1- 19 626 515
- FR-A1- 2 731 491
- GB-A- 237 802
- US-A- 2 639 171

## Beschreibung

### Technisches Gebiet

Die Erfindung betrifft eine Dichtungsanordnung für eine trockenlaufende, zweiwellige Drehkolbenmaschine sowie eine Drehkolbenmaschine mit einer solchen Dichtungsanordnung. Ferner wird ein Verfahren zur Montage eine Dichtungsanordnung bereitgestellt.

### Stand der Technik

Drehkolbenmaschinen, insbesondere Schraubenverdichter und Drehkolbengebläse der Bauart Roots, aber auch Drehkolbenexpansionsmaschinen, werden üblicherweise bis zu Differenzdrücken von etwa 15 bar und bis zu Drehzahlen von etwa 20.000 1/min vornehmlich wälzgelagert. Insbesondere bei höheren Druckdifferenzen werden Gleitlager verwendet. Diese weisen bauartbedingt ein größeres Radialspiel als Wälzlagerungen auf, wodurch größere Wellenverlagerungen auftreten.

Die Versorgung der Lager und der Synchronräder derartiger Drehkolbenmaschinen mit Öl kann auf unterschiedliche Art und Weise erfolgen.

In allen Fällen kommt der Trennung der mit Öl versorgten Räume vom Förderraum eine große Bedeutung zu. Bei zweiwelligen Drehkolbenmaschinen werden folglich vier sogenannte Förderraumabdichtungen benötigt. Aufgrund der hohen Umfangsgeschwindigkeiten der Oberflächen von Wellen in zweiwelligen, trockenlaufenden Drehkolbenmaschinen können berührende Dichtungen, wie z.B. Wellendichtringe, nicht verwendet werden. Nur berührungsfreie Dichtungen sind geeignet.

Da zweiwellige Drehkolbenmaschinen nur selten horizontal geteilt ausgeführt werden, müssen die Dichtungen ebenso wie die Lager aus axialer Richtung in Bohrungen eingeführt werden. Dadurch kommen klassische Labyrinthe als Wellendichtungen ebenfalls nicht in Frage.

Zudem müssen Wellendichtungen für Drehkolbenmaschinen auch radiale Wellenverlagerungen tolerieren können. Diese Verlagerungen werden z.B. durch radiales Lagerspiel und Wellendurchbiegung verursacht.

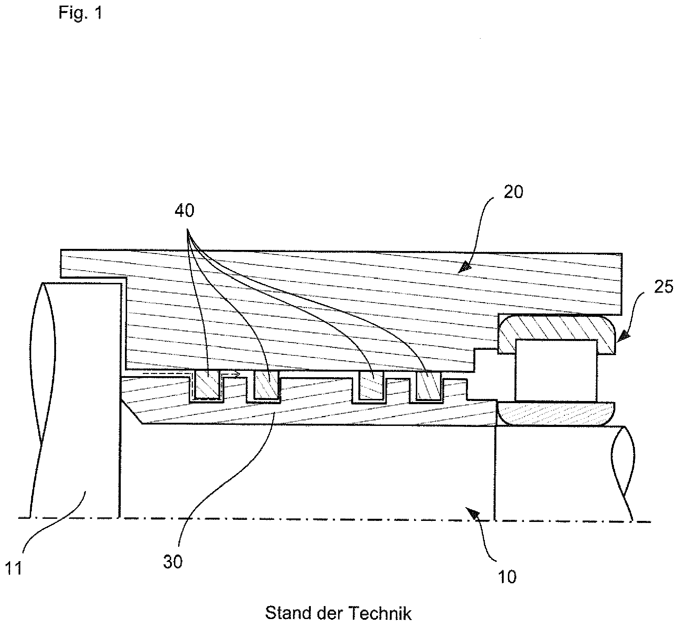

Je nach Druckdifferenz über der Dichtung kommen heutzutage unterschiedliche Typen berührungsfreier Wellendichtungen zum Einsatz:
Für Druckdifferenzen bis etwa 1 bar werden gewöhnlich gebaute Umlenklabyrinth-Dichtungen, bestehend aus Kolbenringen in der Gehäusebohrung und einem sogenannten Ringhalter auf der Welle, verwendet (siehe hierzu Figur 1).

In Figur 1 sind eine Welle 10 sowie ein profilierter Bereich 11 eines Rotors dargestellt, wobei der profilierte Bereich 11 zusammen mit einem Gehäuse 20 einen Förderraum einer Drehkolbenmaschine ausbilden. Die Welle 10 ist mittels einer (hier lediglich schematisch/beispielhaft dargestellten) Lagerung 25 gegenüber dem Gehäuse 20 abgestützt. Zwischen der Lagerung 25 und dem profilierten Bereich 11 des Rotors befindet sich ein Ringhalter 30, der an einer Außenumfangsseite mit mehreren Nuten versehen ist.

In den Nuten des Ringhalters 30 werden jeweils Kolbenringe 40 aufgenommen, die spaltlos an einer Innenseite des Gehäuses 20 anliegen und relativ zum Ringhalter 30 ein gewisses Spiel aufweisen. Auf Grund dieser Anordnung wird ein Leckage-Strom, der in Fig. 1 mit einem entsprechenden Pfeil angedeutet ist, zu einem längeren Weg um die Kolbenringe 40 gezwungen.

Da die Kolbenringe 40 axial in Richtung der Drehachse der Welle 10 beweglich sind, findet beispielsweise bei der Inbetriebnahme ein einseitiges Einschleifen der Kolbenringe 40 am Ringhalter 30 statt, sodass sich auf diese Weise ein relativ kleiner Dichtspalt ausbildet. Dieses Einschleifen kann auch bewusst durch die Positionierung der Welle 10 beziehungsweise den Ringhalter 30 im Zuge der Montage oder durch das Auftreten von höheren Druckdifferenzen erfolgen, die eine axiale Bewegung der Kolbenringe 40 nach sich ziehen.

Die verwendeten Kolbenringe stehen aufgrund der in immensen Stückzahlen hergestellten Verbrennungsmotoren als Massenprodukt sehr preisgünstig und qualitativ hochwertig zur Verfügung.

Eine derartige Förderraumabdichtung ist beispielsweise in CH 661 964 A5 offenbart.

Ein Nachteil der Dichtung besteht in dem für den mitrotierenden genuteten Ringhalter benötigten radialen Bauraum. Hierfür muss die Welle entsprechend dünner ausgeführt werden, wodurch die Belastbarkeit der Welle vermindert wird.

Die Kolbenringe sind nur aufgrund Ihrer Eigenspannung in der Gehäusebohrung axial fixiert. Bei höheren Druckdifferenzen werden die Kolbenringe durch die wirkenden Druckkräfte axial verschoben. Hierdurch kommt es zu dauerhafter axialer Berührung der Kolbenringe an den Nutenflanken des Ringhalters bei hohen Relativgeschwindigkeiten und damit einhergehendem starken Verschleiß.

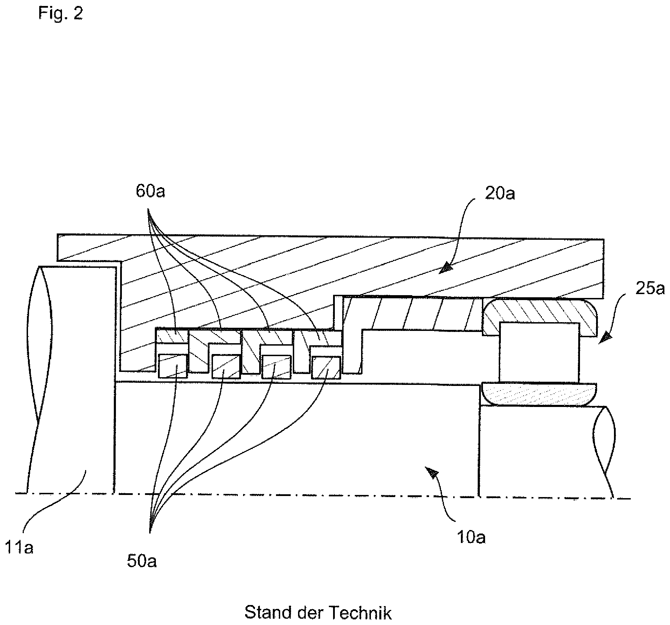

Bei höheren Druckdifferenzen werden daher sogenannte Durchblicklabyrinthe verwendet (siehe hierzu auch Figur 2). Eine solche Förderraumabdichtung umfasst z.B. axial wechselweise angeordnete Schwimmringe 50a und Distanzringe 60a.

Alle Dichtungskomponenten befinden sich bei dieser Variante stationär in einem Gehäuse 20a. Im Gehäuse 20a wird ein Abschnitt eines Rotors dargestellt, der eine Welle 10a und einen profilierten Bereich 11a aufweist, wobei der Rotor mittels einer Lagerung 25a gelagert ist. Die Dichtung erfolgt nur gegen die Wellenoberfläche. Die Dichtwirkung wird erzielt, indem möglichst enge Spalte zwischen Schwimmring 50a und Welle 10a realisiert werden. Zusätzliche Dichtwirkung wird erzielt, indem auf enge Spalte folgend jeweils ein größerer Raum zwischen Distanzring 60a und Welle 10a angeordnet ist. Die Querschnittserweiterung führt zu einer Entspannung der Leckageströmung und damit zum gewünschten hohen Strömungswiderstand. Üblicherweise sind die Distanzringe 60a so ausgeführt, dass sie mit Montagespiel hintereinander in einer Gehäusebohrung angeordnet und axial verspannt werden und dabei gleichzeitig definierte Räume zur Aufnahme der Schwimmringe 50a ausbilden. Ein geringes Spiel zwischen Distanzringen 60a und Gehäusebohrung ist notwendig, um die Nebenleckagen zu begrenzen.

Die verwendeten Schwimmringe 50a werden z.B. aus Graphit gefertigt. Sie sind radial nicht fixiert und in den Grenzen der Spalthöhe beweglich. Bei jedem Neustart der Drehkolbenmaschine erfolgt daher eine neue Positionierung aufgrund der hydrodynamischen Kräfte, bis die Druckdifferenz über dem Schwimmring diesen an seine axiale Führungsfläche stark genug anpresst. Diese Neupositionierung bei jedem Start erzeugt signifikanten Verschleiß an der zylindrischen Innenfläche des Schwimmringes und damit ein Nachlassen der Dichtwirkung. Eine derartige Förderraumabdichtung ist beispielsweise in DE 196 26 515 A1 offenbart.

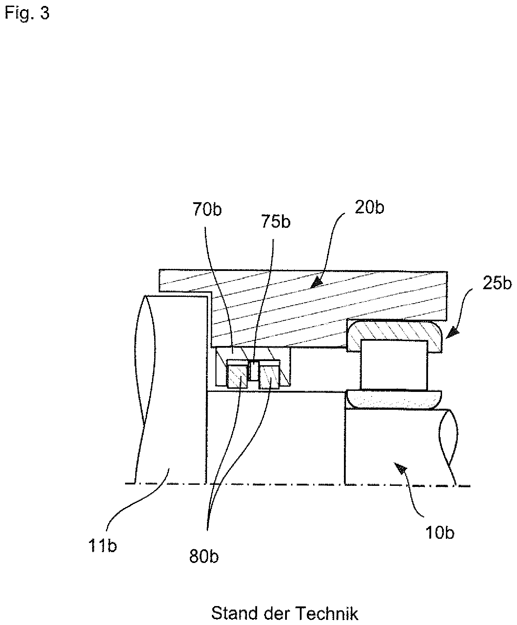

Ein weiteres Beispiel ist in Figur 3 dargestellt. In einem Gehäuse 20b wird ein Rotor aufgenommen, der eine Welle 10b und einen profilierten Bereich 11b aufweist und mittels einer Lagerung 25b gelagert ist. Zur Vermeidung des oben genannten Verschleißes werden Schwimmringe 80b in einem Halter 70b axial z.B. mittels einer Feder 75b vorgespannt. Hierdurch "schwimmen" sie nicht mehr auf der Welle 10b, werden daher besser als "Dichtringe" bezeichnet und erfahren Ihre Positionierung im Idealfall nur beim ersten Start der Drehkolbenmaschine. Sollte aufgrund extremer Betriebszustände die Welle eine ungewöhnliche Verlagerung ausführen, so kann der nur leicht axial vorgespannte Dichtring 80b dennoch radial ausweichen. Eine derartige Förderraumabdichtung ist beispielsweise in EP 2 305 951 A1 offenbart.

### Gegenstand der Erfindung

Ein Ziel der Erfindung ist es, eine Dichtungsanordnung für eine trockenlaufende Drehkolbenmaschine zur Verfügung zu stellen, welche dauerhaft möglichst wenig Leistung aufnimmt, drehzahlunabhängig eine hohe Dichtwirkung aufweist, nahezu verschleißfrei ist und einfach und preisgünstig herstellbar ist. Zudem soll die Dichtungsanordnung für die in Drehkolbenmaschinen vorkommenden Wellenverlagerungen und Temperaturdifferenzen geeignet sein.

Erfindungsgemäß wird hierfür eine Dichtungsanordnung gemäß Anspruch 1 bereitgestellt. Weitere bevorzugte Ausführungsformen sind in den abhängigen Ansprüchen oder nachfolgend erläutert.

Die Dichtungsanordnung zur berührungslosen Abdichtung einer rotierenden Welle einer trockenlaufenden, zweiwelligen Drehkolbenmaschine, umfasst: mehrere Dichtringe, die eingerichtet sind, einen Dichtspalt zur rotierenden Welle auszubilden und zumindest einen Kolbenring, der als Distanzring in einem Bereich zwischen zwei Dichtringen angeordnet ist, wobei die Dichtringe und der Kolbenring mit mindestens einem Federelement axial vorgespannt sind.

Insbesondere umfasst die erfindungsgemäße Dichtungsanordnung zumindest einen Kolbenring, bevorzugt mehrere Kolbenringe, wie diese im Bereich der Verbrennungsmotoren eingesetzt werden. Überraschenderweise hat sich herausgestellt, dass die Verwendung eines derartigen Kolbenrings als Distanzring in einer berührungslosen Wellendichtung für trockenlaufende zweiwellige Drehkolbenmaschinen eine hohe Dichtwirkung ermöglicht. Ferner hat sich in Versuchen gezeigt, dass eine Dichtungsanordnung mit einem solchen Kolbenring bei den in Drehkolbenmaschinen vorkommenden Wellenverlagerungen und Temperaturdifferenzen äußerst geeignet ist.

Kolbenringe als Distanzringe haben ferner die nachfolgend genannten Vorteile:
- Im Außendurchmesser sind Kolbenringe variabel/ flexibel, sodass sie in einer erfindungsgemäßen Dichtungsanordnung eine axial gerichtete Nebenleckageströmung durch spaltlosen Kontakt zwischen Außendurchmesser und Gehäusebohrung unterbinden.
- Als Distanzringe verwendete Kolbenringe weisen in einer solchen Dichtungsanordnung eine zuverlässig nach außen wirkende Radialkraft oder Radialspannung auf, wodurch der Kontakt zwischen Außendurchmesser und Gehäuse sicher gewährleistet wird. Somit sitzt der Kolbenring leicht klemmend in einer Gehäusebohrung.
- Kolbenringe sind axial verschiebbar, sodass sie gegen die Dichtringe bis zum Kontakt aufgeschoben werden können. Somit kann eine radial gerichtete Nebenleckageströmung zwischen Kolbenring und Dichtring unterbunden werden. Des Weiteren kann der Dichtring nach der Positionierung durch die Welle z.B. beim Anfahren der Drehkolbenmaschine in Position gehalten und dadurch dessen Verschleiß vermindert werden.

- Kolbenringe haben enge Form- und Lagetoleranzen sowie geringe Rauhtiefen an den Kontaktflächen.
- In einer Dichtungsanordnung wird durch die Verwendung von Kolbenringen ein kleiner Einbauraum ermöglicht.
- Kolbenringen sind zu vergleichsweise geringen Kosten verfügbar.

Durch die axiale Vorspannung der Dichtringe und Kolbenringe werden die Dichtringe auch radial so in Position gehalten, dass sie sich weder unter dem Einfluss von Schwerkraft noch unter dem von anderen Kräften (wie z.B. aus Maschinenschwingungen resultierenden Kräften) radial verschieben. Gleichzeitig ist die axiale Vorspannung so gering gewählt, dass sich die Dichtringe bei Kontakt mit der Welle dennoch radial verschieben können und damit im Betrieb eine ideale Position einnehmen.

Der oder die Kolbenringe haben bevorzugt einen größeren Außendurchmesser als die Dichtringe, sodass die Außenumfangsseite der Kolbenringe an einer Innenumfangsseite der Gehäusebohrung anliegt und somit eine Abdichtung der Nebenleckage zwischen der Dichtungsanordnung und dem Gehäuse gewährleistet, wobei die Dichtringe radial bewegbar bleiben.

Ferner wird der Innendurchmesser der Kolbenringe signifikant größer gewählt als der der Dichtringe, damit die Leckageströmung nach passieren des Spaltes zwischen Welle und Dichtring in einen vergleichsweise weiten Raum eintritt, dort expandiert und/oder verwirbelt und somit ein großer Strömungswiderstand für die Leckageströmung entsteht und diese dadurch vermindert wird. Die radial äußere Begrenzung dieses Expansionsraumes wird also durch die innere Umfangsfläche des Kolbenringes gebildet.

Durch die erfindungsgemäße Dichtungsanordnung kann im Vergleich zum Stand der Technik eine Verkleinerung des Einbauraumes erreicht werden. Die hohe Genauigkeit der Dimensionen der Kolbenringe bei geringen Stückkosten ermöglicht eine vergleichsweise präzise und dabei kostengünstige Umsetzung. Ferner ist die Dichtungsanordnung auch im Start-Stopp-Betrieb verschleißfrei.

Gemäß einer bevorzugten Ausführungsform ist es vorgesehen, dass die Dichtungsanordnung mehrere Kolbenringe aufweist, die jeweils in einem Bereich zwischen zwei Dichtringen angeordnet sind. Die Dichtungsanordnung ist somit durch die Verwendung weiterer Dichtringe und Kolbenringe flexibel erweiterbar, sodass die Dichtungsanordnung an einen konkreten Anwendungsfall angepasst werden kann.

Bei sogenannten "trockenlaufenden" Drehkolbenmaschinen haben die profilierten Bereiche der Rotoren aufgrund der Synchronisation der Rotoren durch ein außerhalb des Förderraums angeordnetes Synchronisationsgetriebe untereinander keinen Kontakt. Allerdings können dennoch flüssige Medien eingespritzt werden, um z.B. eine Kühlung während der Verdichtung zu erreichen. Nur wenn das Einspritzmedium zudem ausreichend viskos ist, um eine Schmierung der profilierten Bereiche zu erzielen, wird auf ein Synchronisationsgetriebe verzichtet. Dann spricht man nicht mehr von einer "trockenlaufenden" Drehkolbenmaschine.

Eine trockenlaufende Drehkolbenmaschine umfasst üblicherweise zwei in einem Gehäuse gelagerte Rotoren mit profilierten Bereichen, wobei die profilierten Bereiche miteinander gegenläufig kämmen, um zusammen mit dem Gehäuse einen Förderraum zu definieren. Eine der Lageranordnungen der Wellen der Rotoren in axialer Richtung ist als Festlageranordnung ausgebildet. Die Lager und das Synchrongetriebe werden dabei mit Schmiermittel versorgt. Die ölgeschmierten Räume (auch als "Ölraum" bezeichnet), in denen sich die Lageranordnungen und die Synchronräder befinden, sind mittels teilweise vergleichsweise aufwändigen Wellendichtungen vom Förderraum getrennt, so dass das Fördermedium nicht mit Öl in Kontakt kommt.

Aufgabe von Synchronzahnrädern ist es, das Rotorenpaar mit möglichst geringem Spiel aber berührungsfrei gegensinnig zueinander rotieren zu lassen. Hierbei übertragen die Synchronräder ein signifikantes Drehmoment.

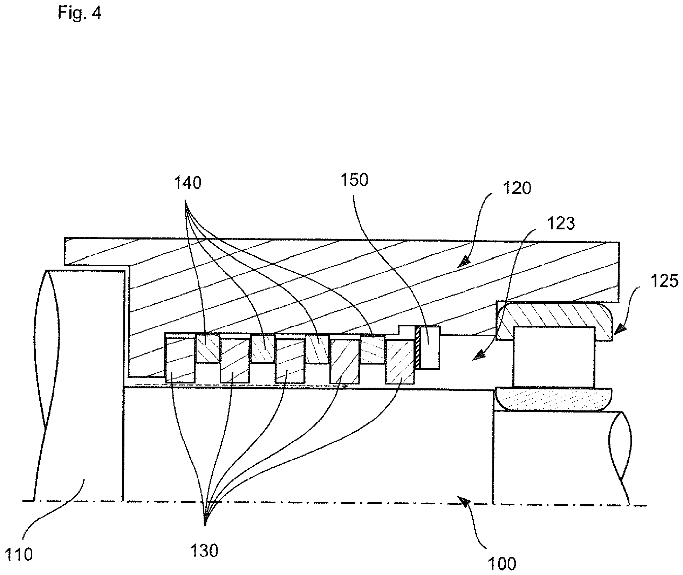

Gemäß einer bevorzugten Ausführungsform (z.B. Figur 4) ist das Federelement zum axialen Verspannen der Dichtringe sowie des zumindest einen Kolbenringes als Wellenfeder ausgebildet. Die Wellenfeder kann die Funktion eines Sicherungsrings mit übernehmen und hat in diesem Fall die Aufgabe, die Dichtringe nicht nur radial, sondern auch axial in Position zu halten. Pro Dichtungsanordnung genügt aufgrund der axialen Verschiebbarkeit der Kolbenringe eine Wellenfeder. Bei größeren Anzahlen von Dichtringen und Kolbenringen kann auch die Verwendung mehrere Federelemente vorgesehen sein. Dabei wird trotz der axialen Verschiebbarkeit eine spaltlose Anordnung des Kolbenrings relativ zur Gehäusebohrung gewährleistet, sodass die Nebenleckage weiterhin verhindert wird.

Es ist bevorzugt, dass der zumindest eine Kolbenring in einer Gehäusebohrung spaltlos anliegend, radial vorgespannt angeordnet wird.

Ferner ist bevorzugt, dass der zumindest eine Kolbenring mit überlapptem Stoß bevorzugt gasdichtem Stoß, besonders bevorzugt Walzenstoß, ausgeführt ist. In Versuchen hat sich gezeigt, dass insbesondere diese Bauformen für die Dichtungsanordnung vorteilhaft sind.

Ferner kann es vorgesehen sein, dass die Dichtringe aus Messing, Bronze, Rotguss, Graphit, Kunststoff, insbesondere PEEK oder PTFE, Grauguss oder Sphäroguss gefertigt sind. Ein kurzer Kontakt zwischen Wellenoberfläche und Dichtring-Innenumfang, insbesondere beim Einstellen der radialen Position des Dichtringes, ist somit ohne "Fressen" der Dichtringe mit der Welle des Rotors möglich.

Das Federelement ist bevorzugt zur Anlage an einem Dichtring angeordnet, sodass der entsprechende Dichtring zwischen einem Kolbenring und dem Federelement gehalten wird.

Ein Federelement kann auch anstelle eines Kolbenringes zwischen zwei Dichtringen angeordnet sein. Eine Anordnung eines Federelements zwischen Dichtringen kann beispielsweise auch in Kombination mit einem weiteren Federelement vorgesehen sein.

Es ist bevorzugt, dass einer der Dichtringe zur Anlage an einem Vorsprung eines Gehäuses der Drehkolbenmaschine angeordnet ist. Das Federelement kann somit die Dichtringe und den zumindest einen Kolbenring gegen den Vorsprung drücken.

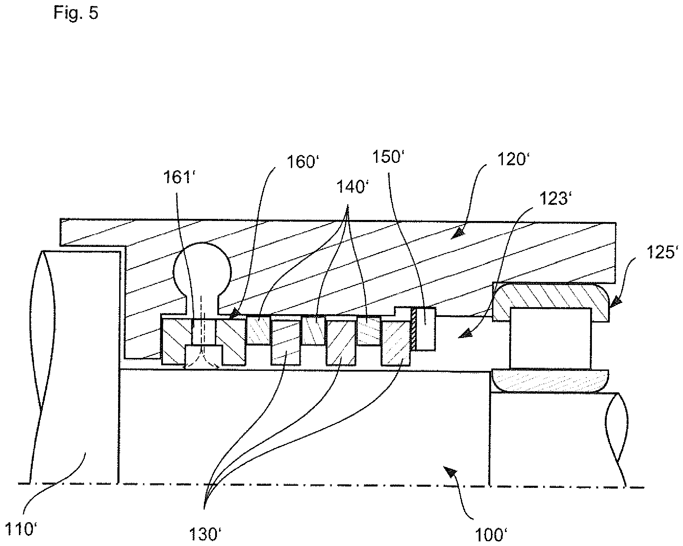

Gemäß einer weiteren Ausführungsform (z.B. Figur 5) umfasst die Dichtungsanordnung einen Kammerdichtring, der eine Öffnung, beispielsweise zur Einleitung eines Sperrfluids oder zur Verbindung mit der Atmosphäre, aufweist. Als Sperrfluid kann insbesondere Gas, bevorzugt neutrale Gase wie z.B. Stickstoff, eingesetzt werden.

Dabei kann es ferner vorgesehen sein, dass der Kammerdichtring an einem axialen Endabschnitt der Dichtungsanordnung angeordnet ist. Hierbei wird, wenn es sich bei dem Kammerdichtring um einen Sperrfluid-Dichtring handelt, dieser an einem dem Förderraum benachbarten Bereich der Dichtungsanordnung angeordnet. Ein Kammerdichtring, der eine mit der Atmosphäre in Verbindung stehende Öffnung aufweist, ist bevorzugt an einem vom Förderraum abgewandten axialen Endabschnitt der Dichtungsanordnung angeordnet.

Bevorzugt umfasst die Dichtungsanordnung mehrere Kammerdichtringe, wobei einer der Kammerdichtringe als Sperrfluid-Dichtring zum Einbringen eines Sperrfluids ausgeführt ist und der weitere Kammerdichtring eine mit der Atmosphäre in Verbindung stehende Öffnung aufweist.

Ferner kann es vorgesehen sein, dass der Sperrfluid-Dichtring zur Anlage an einem Vorsprung eines Gehäuses der Drehkolbenmaschine angeordnet ist. Das Federelement kann somit die Dichtringe, den zumindest einen Kolbenring sowie den Sperrfluid-Dichtring gegen den Vorsprung drücken.

Ferner wird erfindungsgemäß eine trockenlaufende Drehkolbenmaschine bereitgestellt, die umfasst: mindestens zwei in einem Gehäuse angeordnete Rotoren, die miteinander gegenläufig kämmende, profilierte Bereiche aufweisen, um zusammen mit dem Gehäuse einen Förderraum zu definieren, und mindestens eine Dichtungsanordnung gemäß einem der vorangegangenen Aspekte, die an einer Welle der Rotoren dichtend angeordnet ist.

Gemäß einer Ausführungsform ist an jedem der Rotoren, insbesondere an jedem Wellenabschnitt der Rotoren, eine Dichtungsanordnung gemäß einem der vorangegangenen Aspekte angeordnet.

Erfindungsgemäß wird ferner ein Verfahren zur Montage einer Dichtungsanordnung bereitgestellt. Die Dichtungsanordnung ist dabei gemäß einem der vorangegangenen Aspekte ausgebildet. Das Verfahren umfasst die Schritte: Einschieben einer Anordnung aus Dichtringen und einem zwischen den Dichtringen angeordneten Kolbenring in ein Gehäuse, insbesondere eine Gehäusebohrung einer Drehkolbenmaschine, und axiales Vorspannen der Anordnung aus Dichtringen und zumindest eines Kolbenringes mit einem Federelement.

Durch das Verfahren wird eine Montage einer Dichtungsanordnung erleichtert. Bezüglich der Vorteile der Kolbenringe als Distanzringe wird auf die voranstehenden Erläuterungen verwiesen.

### Kurze Beschreibung der Zeichnungen

- Fig. 1: zeigt eine bekannte, als echtes Labyrinth ausgeführte Wellendichtung unter Verwendung von Kolbenringen mit einem mitrotierenden Ringhalter auf der Welle
- Fig. 2: zeigt eine weitere bekannte, als Durchblick-Labyrinth ausgeführte Wellendichtung unter Verwendung von Schwimmringen.
- Fig. 3: zeigt ebenfalls eine bekannte, als Durchblick-Labyrinth ausgeführte Wellendichtung unter Verwendung von axial leicht vorgespannten Dichtringen.
- Fig. 4: zeigt eine erste Ausführungsform der erfindungsgemäßen Dichtungsordnung, ausgeführt als Durchblick-Labyrinth unter Verwendung von axial leicht vorgespannten Dichtringen und sowie Kolbenringen, welche als Distanzringe dienen.
- Fig. 5: zeigt eine zweite Ausführungsform der erfindungsgemäßen Dichtungsanordnung, wobei die Verwendung von modifizierten Dichtringen ermöglicht wird (z.B. eines Kammerdichtringes, beispielsweise zur Beaufschlagung mit Sperrmedium).

### Detaillierte Beschreibung der bevorzugten Ausführungsform

Nachfolgend werden anhand der Figuren Ausführungsformen einer Dichtungsanordnung für eine Drehkolbenmaschine anhand anschaulicher Beispiele gezeigt.

In Fig. 4 wird eine erste Ausführungsform einer Dichtungsanordnung gemäß der Erfindung dargestellt. Die Dichtungsanordnung ist in einer Drehkolbenmaschine vorgesehen, die zwei gegenläufig drehende Rotoren umfasst. Mit Drehung der Rotoren wird ein profilierter Bereich 110 des jeweiligen Rotors angetrieben.

Eine Welle 100 und der profilierter Bereich 110 des Rotors sind zumindest abschnittsweise in einem Gehäuse 120 aufgenommen und mittels einer anschaulich dargestellten Lagerung 125 im Gehäuse 120 gelagert. Die Dichtungsanordnung ist derart angeordnet, dass hiermit der Förderraum vom sogenannten Ölraum getrennt wird.

Ein Raum 123 zwischen der dargestellten Dichtungsanordnung und der anschaulich dargestellten Lagerung 125 ist ebenfalls anschaulich dargestellt und kann weitere Elemente, auch Dichtungen der selben oder anderer Bauart, enthalten.

Die Dichtungsanordnung umfasst eine Vielzahl von Dichtringen 130, sodass ein Dichtspalt zwischen der Welle 100 und einer Innenumfangsseite der Dichtringe 130 ausgebildet ist. Der Dichtspalt gewährleistet die berührungsfreie Drehbarkeit der Welle 100. Zwischen den Dichtringen 130 ist jeweils ein Kolbenring 140 vorgesehen, der als planparalleler Abstandshalter dient, sodass durch die Anordnung aus Dichtringen 130 und Kolbenringen 140 mehrere Verwirbelungskammern/Expansionsräume zwischen der Welle 100, benachbarten Dichtringen 130 und den Kolbenringen 140 ausgebildet sind.

Die Kolbenringe 140 übernehmen unter anderem die Aufgabe, durch eine in radialer Richtung wirkende Vorspannkraft der Kolbenringe eine Abdichtung der Nebenleckage zwischen der Dichtungsanordnung und dem Gehäuse 120 auszubilden. Ferner sind die Kolbenringe 140 trotz radialer Vorspannung noch axial verschiebbar, sodass die Dichtungsanordnung bei der Montage in das Gehäuse 120 eingeschoben werden kann. Je nach Anwendungsfall können Kolbenringe 140 mit unterschiedlichen Stoßausführungen eingesetzt werden.

Ferner umfasst die Dichtungsanordnung eine Wellenfeder 150, die die Dichtringe 130 sowie die Kolbenringe 140 in Position hält. Die axiale Verschiebbarkeit der Kolbenringe 140 ist bei diesem Aufbau gegeben, ohne die Abdichtung einer Nebenleckage negativ zu beeinflussen.

Die Wellenfeder stellt nur eine Ausführungsform möglicher Federelemente dar und auch die Befestigung der Wellenfeder in einer Nut der Gehäusebohrung stellt nur eine Ausführungsform verschiedenen möglicher Befestigungen von Federelementen dar. Beispielsweise könnte alternativ ein geeignet geformter Distanzring zwischen Federelement und Lager angeordnet sein, ähnlich wie in Figur 2 dargestellt.

Durch die axiale Vorspannung aller Dichtringe und Kolbenringe werden die Dichtringe auch radial so fest in Position gehalten, dass sie sich weder unter dem Einfluss von Schwerkraft noch unter dem von anderen Kräften (wie z.B. aus Maschinenschwingungen resultierenden Kräften) radial verschieben. Gleichzeitig ist die axiale Vorspannung so gering gewählt, dass sich die Dichtringe bei Kontakt mit der Welle dennoch radial verschieben können und damit im Betrieb eine ideale Position einnehmen. Die richtige Einstellung der axialen Vorspannkraft erfolgt durch Auswahl eines geeigneten axialen Federelementes unter Berücksichtigung der Vorspannkraft der Kolbenringe und der Anzahl der Kolbenringe. Die Vorspannkraft der Kolbenringe wiederum kann durch Auswahl der Ringe und Festlegung der exakten Größe der Gehäusebohrung, in welche die Kolbenringe eingebracht werden, erfolgen.

Die Dichtungsanordnung ist im Betrieb berührungsfrei und daher auch bei hohen Wellen-Umfangsgeschwindigkeiten verschleißfrei. Da aber wie oben beschrieben ein kurzer Kontakt zwischen Wellenoberfläche und Dichtring-Innenumfang, insbesondere beim einmaligen Einstellen der radialen Position des Dichtringes, möglich ist, wird das Material der Dichtringe so gewählt, um bei Kontakt mit den zumeist aus Stahl oder Edelstahl gefertigten Wellen der Rotoren nicht zu "fressen". Vorteilhafte Materialien für Dichtringe mit guten Notlaufeigenschaften sind z.B. Messing, Bronze, Rotguss, Graphit, einige Kunststoffe, wie z.B. PEEK oder PTFE, Grauguss (Gusseisen mit Lamellengraphit) oder Sphäroguss (Gusseisen mit Kugelgraphit).

Eine zweite Ausführungsform einer Dichtungsanordnung zur Abdichtung einer rotierenden Welle einer trockenlaufenden, zweiwelligen Drehkolbenmaschine ist in Fig. 5 dargestellt.

Die Dichtungsanordnung ist in einer Drehkolbenmaschine vorgesehen, die Rotoren mit einer Welle 100` sowie einem profilierten Bereich 110' umfasst. Die Welle 100` und der profilierte Bereich 110' sind zumindest abschnittsweise in einem Gehäuse 120' aufgenommen und mittels einer anschaulich dargestellten Lagerung 125` im Gehäuse 120' gelagert.

Ein Raum 123` zwischen der dargestellten Dichtungsanordnung und der anschaulich dargestellten Lagerung 125` ist ebenfalls anschaulich dargestellt und kann, ähnlich wie in der ersten Ausführungsform, weitere Elemente, auch Dichtungen derselben oder anderer Bauart, enthalten.

Die Dichtungsanordnung umfasst eine Vielzahl von Dichtringen 130', die derart angeordnet sind, dass ein Dichtspalt zwischen der Welle 100` und einer Innenumfangsseite der Dichtringe 130' ausgebildet ist. Zwischen den Dichtringen 130' ist jeweils ein Kolbenring 140` vorgesehen, der als planparalleler Abstandshalter dient, sodass durch die Anordnung aus Dichtringen 130` und Kolbenringen 140' mehrere Verwirbelungskammern/Expansionsräume zwischen der Welle 100', benachbarten Dichtringen 130` und den Kolbenringen 140` ausgebildet sind.

Ferner umfasst die Dichtungsanordnung eine Wellenfeder 150', die die Dichtringen 130` sowie die Kolbenringe 140' in Position hält. Ähnlich wie in der ersten Ausführungsform stellt die Wellenfeder lediglich eine Ausführungsform möglicher Federelemente dar.

Bezüglich der Materialauswahl für die Dichtringe 130' wird auf die Ausführungen zur ersten Ausführungsform verwiesen.

Die Dichtungsanordnung gemäß der zweiten Ausführungsform unterscheidet sich dadurch von der ersten Ausführungsform, dass zusätzlich ein Sperrmedium, insbesondere Sperrgas, eingebracht wird. Hierzu weist die Dichtungsanordnung einen Sperrfluid-Dichtring 160` als Beispiel eines Kammerdichtrings auf, der eine Öffnung 161` zur Einleitung eines Sperrfluids umfasst. Der Sperrfluid-Dichtring 160` ist in diesem Beispiel an einem axialen Endabschnitt der Dichtungsanordnung angeordnet und wird zusammen mit den Dichtringen 130' sowie den Kolbenringen 140' durch die Wellenfeder 150` verspannt.

Obwohl dies in Figur 5 nicht dargestellt ist, kann die Dichtungsanordnung gemäß einer Modifikation der zweiten Ausführungsform einen Kammerdichtring mit einer Öffnung umfassen, welche Öffnung mit der Atmosphäre in Verbindung steht. Dieser Kammerdichtring ist näher zur Lagerung 125` angeordnet als der Sperrfluid-Dichtring 160`.

In den Figuren 4-5 werden Dichtungsanordnungen dargestellt, die mit einer oder mehreren Dichtungsanordnungen kombiniert werden können. Eine solche weitere Dichtungsanordnung kann gleich oder ähnlich wie eine der Dichtungsanordnungen gemäß einer der genannten Ausführungsformen ausgebildet sein.

Dabei ist es möglich, zwischen einer Dichtungsanordnung gemäß einer der genannten Ausführungsformen und einer Lagerung für die Welle einen Kammerdichtring mit einer mit der Atmosphäre in Verbindung stehenden Öffnung vorzusehen.

## Patentansprüche

1. Dichtungsanordnung zur berührungslosen Abdichtung einer rotierenden Welle einer trockenlaufenden, zweiwelligen Drehkolbenmaschine, umfassend:
mehrere Dichtringe (130, 130'), die im Gebrauch so eingerichtet sind,
einen Dichtspalt zur Welle auszubilden,
**dadurch gekennzeichnet, daß** zumindest ein Kolbenring (140, 140') in einem Bereich zwischen zwei Dichtringen (130, 130') angeordnet ist, und daß zumindest ein Federelement (150, 150') zum axialen Vorspannen der Dichtringe (130, 130') und des zumindest einen Kolbenrings (140, 140') im Gebrauch in einer Gehäusebohrung eingerichtet ist

2. Dichtungsanordnung gemäß Anspruch 1, umfassend mehrere Kolbenringe (140, 140'), die jeweils in einem Bereich zwischen zwei Dichtringen (130, 130') angeordnet sind.

3. Dichtungsanordnung gemäß einem der vorangegangenen Ansprüche, wobei das Federelement zum axialen Verspannen der Dichtringe (130, 130') sowie des zumindest einen Kolbenrings (140, 140') als Wellenfeder ausgebildet ist.

4. Dichtungsanordnung gemäß einem der vorangegangenen Ansprüche, wobei im Gebrauch der zumindest eine Kolbenring in einer Gehäusebohrung spaltlos anliegend, radial vorgespannt angeordnet wird.

5. Dichtungsanordnung gemäß einem der vorangegangenen Ansprüche, wobei der zumindest eine Kolbenring mit überlapptem Stoß bevorzugt gasdichtem Stoß, besonders bevorzugt Walzenstoß, ausgeführt ist.

6. Dichtungsanordnung gemäß einem der vorangegangenen Ansprüche, wobei die Dichtringe aus Messing, Bronze, Rotguss, Graphit, Kunststoff, insbesondere PEEK oder PTFE, Grauguss oder Sphäroguss gefertigt sind.

7. Dichtungsanordnung gemäß einem der vorangegangenen Ansprüche, wobei zwischen den Dichtringen (130, 130') eine Kammer ausgebildet ist, wobei eine radial äußere Seite der Kammer durch den inneren Umfang eines zwischen den Dichtringen (130, 130') angeordneten Kolbenrings (140, 140') gebildet wird.

8. Dichtungsanordnung gemäß einem der vorangegangenen Ansprüche, wobei der oder die Kolbenringe (140, 140') einen größeren Außendurchmesser aufweisen als die Dichtringe (130, 130').

9. Dichtungsanordnung gemäß einem der vorangegangenen Ansprüche, wobei im Gebrauch einer der Dichtringe (130) zur Anlage an einem Vorsprung eines Gehäuses (120) der Drehkolbenmaschine angeordnet ist.

10. Dichtungsanordnung gemäß einem der vorangegangenen Ansprüche, ferner umfassend einen Kammerdichtring (160`), der eine Öffnung aufweist, wobei die Öffnung insbesondere zur Einleitung eines Sperrfluids oder zur Verbindung mit der Atmosphäre vorgesehen ist, wobei bevorzugt ist, dass der Kammerdichtring (160') an einem axialen Endabschnitt der Dichtungsanordnung angeordnet ist.

11. Dichtungsanordnung gemäß Anspruch 10, wobei die Dichtungsanordnung mehrere Kammerdichtringe aufweist.

12. Trockenlaufende Drehkolbenmaschine, umfassend:
mindestens zwei in einem Gehäuse (120, 120')angeordneteRotoren mit profilierten Bereichen (110, 110'), wobei die profilierten Bereiche (110, 110`) miteinander gegenläufig kämmen, um mit dem Gehäuse (120, 120') einen Förderraum zu definieren, und
mindestens eine Dichtungsanordnung gemäß einem der vorangegangenen Ansprüche, die an einer Welle (100, 100') der Rotoren dichtend angeordnet ist.

13. Drehkolbenmaschine gemäß Anspruch 12, wobei an jedem der Rotoren, insbesondere den Wellenabschnitten der Rotoren, eine Dichtungsanordnung gemäß einem der Ansprüche 1-11 angeordnet ist.

14. Drehkolbenmaschine gemäß Anspruch 12 oder 13, wobei die Dichtungsanordnung zwischen dem Förderraum und einem Lager (125, 125'), insbesondere einem Wälzlager, der Welle (100, 100') vorgesehen ist.

15. Verfahren zur Montage einer Dichtungsanordnung gemäß einem der Ansprüche 1-11,
umfassend die Schritte:
Einschieben einer Anordnung aus Dichtungsringen (130, 130') und einem zwischen den Dichtringen (130, 130') angeordneten Kolbenring (140, 140') in ein Gehäuse (120, 120'), insbesondere ein Gehäuse einer Drehkolbenmaschine,
Axiales Vorspannen der Anordnung aus Dichtringen (130, 130') und Kolbenring (140, 140') mit zumindest einem Federelement (150, 150').

## Claims

1. Sealing arrangement for contactless sealing of a rotating shaft of a dry-running twin-shaft positive displacement machine, comprising
several seal rings (130, 130') which, in use, are arranged to form a sealing gap to the shaft,
**characterised in that** at least one piston ring (140, 140') is arranged in an area between two seal rings (130, 130'), and that
at least one spring element (150, 150') for axial pre-tensioning of the seal rings (130, 130') and the at least one piston ring (140, 140') is, in use, arranged in a housing bore.

2. Sealing arrangement according to claim 1, comprising several piston rings (140, 140'), which are each arranged in an area between two seal rings (130, 130').

3. Sealing arrangement according to any one of the previous claims, wherein the spring element for axially tensioning the seal rings (130, 130') as well as the at least one piston ring (140, 140'), is designed as a wave spring.

4. Sealing arrangement according to any one of the previous claims, wherein, in use, the at least one piston ring is arranged in a housing bore with gapless contact in a radially prestressed manner.

5. Sealing arrangement according to any one of the previous claims, wherein the at least one piston ring is designed with step cut, preferably a gas-tight cut, particularly preferred semi-circular gastight cut.

6. Sealing arrangement according to any one of the previous claims, wherein the seal rings are made of brass, bronze, gunmetal, graphite, plastic, in particular PEEK or PTFE, gray cast iron or nodular iron.

7. Sealing arrangement according to any one of the previous claims, wherein a chamber is formed between the seal rings (130, 130'), wherein a radially outer side of the chamber is formed by the inner circumference of a piston ring (140, 140') arranged between the seal rings (130, 130').

8. Sealing arrangement according to any one of the previous claims, wherein the one or the several piston rings (140, 140') have a larger outer diameter than the seal rings (130, 130').

9. Sealing arrangement according to any one of the previous claims, wherein, in use, one of the seal rings (130) is arranged to a protrusion of a housing (120) of the positive displacement machine.

10. Sealing arrangement according to any one of the previous claims, further comprising a chamber seal ring (160') having an opening, wherein the opening is provided in particular for introducing a barrier fluid or for connection to the atmosphere, wherein it is preferred that the chamber seal ring (160') is arranged at an axial final section of the sealing arrangement.

11. Sealing arrangement according to claim 10, wherein the sealing arrangement comprises several chamber seal rings.

12. A dry-running positive displacement machine comprising:
at least two rotors with profiled areas (110, 110') arranged in a housing (120, 120'), the profiled areas (110, 110') meshing with each other in opposite directions to define a conveying chamber with the housing (120, 120'), and
at least one sealing arrangement according to any one of the previous claims, which is arranged in a sealing manner on a shaft (100, 100') of the rotors.

13. A positive displacement machine according to claim 12, wherein a sealing arrangement according to one of claims 1-11 is arranged on each of the rotors, in particular the shaft sections of the rotors.

14. Positive displacement machine according to claim 12 or 13, wherein the sealing arrangement is provided between the conveying chamber and a bearing (125, 125'), in particular a roller bearing, of the shaft (100, 100').

15. A method of assembling a sealing arrangement according to any one of claims 1-11, comprising the steps of:
Inserting an arrangement of seal rings (130, 130') and a piston ring (140, 140') arranged between the sealing rings (130, 130') into a housing (120, 120'), in particular a housing of a positive displacement machine,
Axial pre-tensioning of the arrangement of sealing rings (130, 130') and piston ring (140, 140') with at least one spring element (150, 150').

## Revendications

1. Agencement d'étanchéification destiné à étanchéifier sans contact un arbre rotatif d'une machine à piston rotatif fonctionnant à sec, à arbres jumelés, comprenant :
plusieurs bagues d'étanchéité (130, 130'), qui en utilisation sont mises au point pour former une fente d'étanchéité par rapport à l'arbre,
**caractérisé en ce qu'**au moins un segment de piston (140, 140') est disposé dans une zone entre deux bagues d'étanchéité (130, 130'), et que
au moins un élément de ressort (150, 150') est mis au point pour précontraindre axialement les bagues d'étanchéité (130, 130') et l'au moins un segment de piston (140, 140') lors de l'utilisation dans un alésage de boîtier.

2. Agencement d'étanchéification selon la revendication 1, comprenant plusieurs segments de piston (140, 140'), qui sont disposés respectivement dans une zone entre les deux bagues d'étanchéité (130, 130').

3. Agencement d'étanchéification selon l'une quelconque des revendications précédentes, dans lequel l'élément de ressort est formé en tant que ressort ondulé pour serrer axialement les bagues d'étanchéité (130, 130') ainsi que l'au moins un segment de piston (140, 140').

4. Agencement d'étanchéification selon l'une quelconque des revendications précédentes, dans lequel en utilisation, l'au moins un segment de piston est disposé de manière précontrainte radialement tout en reposant sans fente dans un alésage de boîtier.

5. Agencement d'étanchéification selon l'une quelconque des revendications précédentes, dans lequel l'au moins un segment de piston est réalisé avec une coupe baïonnette, de manière préférée une coupe étanche aux gaz, de manière particulièrement préférée une coupe tangentielle.

6. Agencement d'étanchéification selon l'une quelconque des revendications précédentes, dans lequel les bagues d'étanchéité sont produites à partir de laiton, de bronze, de laiton rouge, de graphite, de matière plastique, en particulier de PEEK ou de PTFE, de fonte grise ou de fonte nodulaire.

7. Agencement d'étanchéification selon l'une quelconque des revendications précédentes, dans lequel une chambre est formée entre les bagues d'étanchéité (130, 130'), dans lequel un côté radialement extérieur de la chambre est formé par la périphérie intérieure d'un segment de piston (140, 140') disposé entre les bagues d'étanchéité (130, 130').

8. Agencement d'étanchéification selon l'une quelconque des revendications précédentes, dans lequel le ou les segments de piston (140, 140') présentent un diamètre extérieur plus grand que les bagues d'étanchéité (130, 130').

9. Agencement d'étanchéification selon l'une quelconque des revendications précédentes, dans lequel lors de l'utilisation, une des bagues d'étanchéité (130) est disposée pour venir en appui sur une partie faisant saillie d'un boîtier (120) de la machine à piston rotatif.

10. Agencement d'étanchéification selon l'une quelconque des revendications précédentes, comprenant en outre une bague d'étanchéité de chambre (160'), qui présente une ouverture, dans lequel l'ouverture est prévue en particulier pour introduire un fluide de blocage ou pour être reliée à l'atmosphère, dans lequel il est préféré que la bague d'étanchéité de chambre (160') soit disposée sur une section d'extrémité axiale de l'agencement d'étanchéification.

11. Agencement d'étanchéification selon la revendication 10, dans lequel l'agencement d'étanchéification présente plusieurs bagues d'étanchéité de chambre.

12. Machine à piston rotatif à fonctionnement à sec, comprenant : au moins deux rotors dans un boîtier (120, 120') avec des zones profilées (110, 110'), dans laquelle les zones profilées (110, 110') s'engrènent les unes avec les autres dans le sens opposé pour définir un espace de refoulement avec le boîtier (120, 120'), et
au moins un agencement d'étanchéification selon l'une quelconque des revendications précédentes, qui est disposé tout en assurant l'étanchéité sur un arbre (100, 100') des rotors.

13. Machine à piston rotatif selon la revendication 12, dans lequel un agencement d'étanchéification selon l'une quelconque des revendications 1 à 11 est disposé sur chacun des rotors, en particulier les sections d'arbre des rotors.

14. Machine à piston rotatif selon la revendication 12 ou la revendication 13, dans lequel l'agencement d'étanchéification est prévu entre l'espace de refoulement et un palier (125, 125'), en particulier un palier de roulement, de l'arbre (100, 100').

15. Procédé de montage d'un agencement d'étanchéification selon l'une quelconque des revendications 1 à 11, comprenant les étapes de :
enfilement d'un agencement composé de bagues d'étanchéité (130, 130') et d'un segment de piston (140, 140') disposé entre les bagues d'étanchéité (130, 130') dans un boîtier (120, 120'), en particulier un boîtier d'une machine à piston rotatif,
précontrainte axiale de l'agencement composé de bagues d'étanchéité (130, 130') et d'un segment de piston (140, 140') avec au moins un élément de ressort (150, 150').
